(19) Europäisches Patentamt

European Patent Office

Office européen des brevets

(11) Veröffentlichungsnummer: **0 491 446 A1**

## (12) EUROPÄISCHE PATENTANMELDUNG

(21) Anmeldenummer: **91250300.0**

(22) Anmeldetag: **31.10.91**

(51) Int. Cl.⁵: **F16K 11/085**

(30) Priorität: **17.12.90 DE 4040797**

(43) Veröffentlichungstag der Anmeldung:
**24.06.92 Patentblatt 92/26**

(84) Benannte Vertragsstaaten:
**AT BE DE FR GB IT SE**

(71) Anmelder: **MANNESMANN Aktiengesellschaft
Mannesmannufer 2
W-4000 Düsseldorf 1(DE)**

(72) Erfinder: **Meyer, Ernst-August
Am Rübekamp 12
W-3015 Wennigsen 5(DE)**

(74) Vertreter: **Presting, Hans-Joachim, Dipl.-Ing.
et al
Meissner & Meissner Patentanwaltsbüro
Herbertstrasse 22
W-1000 Berlin 33(DE)**

(54) **Ventil für Fluide, insbesondere Druckluftventil.**

㊼ Ein Ventil für Fluide weist ein Ventilgehäuse (1) mit einem in verschiedene Schaltstellungen bewegbaren, abgedichteten Ventilelement (2) auf, sowie Anschlüsse (3 bis 6) für Arbeits-, Druck-, Entlüftungsleitungen und dgl. und ist mit in den einzelnen Schaltstellungen jeweils zusammen mit Umfangsflächen des Ventilgehäuses (1) einen Ventilsitz (19) bildendenden Dichtungsringen (7) versehen.

Um ein Ventil mit einfachstem Aufbau bei einer großen Zahl von Schaltstellungen für unterschiedliche Anzahlen von Schaltstellungen, mit kurzen Schaltzeiten und bei geringstmöglicher Teilezahl zu schaffen, wird vorgeschlagen, daß dem drehangetriebenen Ventilelement (2) zumindest ein Dichtungsring (7) zugeordnet ist, der jeweils in einer zur Drehachse (8) schrägverlaufenden Ebene (9) angeordnet ist, daß sich in derselben Ebene (9) eine Scheibe (11) oder ein Axialkörper befinden, die in unterschiedlichenDrehstellungen jeweils zusammen mit einem ortsfesten Dichtungsring (7) oder die jeweilige Scheibe (11) bzw. der Axialkörper und zumindest ein zugehöriger Dichtungsring (7) zusammen mit der Ventilgehäusebohrung (1a) den Ventilsitz (19) bilden.

Fig.1a

Die Erfindung betrifft ein Ventil für Fluide, insbesondere ein Druckluftventil, mit einem einteiligen oder mehrteiligen Ventilgehäuse und mit einem in dem Ventilgehäuse gelagerten, in verschiedene Schaltstellungen bewegbaren, abgedichteten Ventilelement mit an dem Ventilgehäuse vorgesehenen Anschlüssen für Arbeits-, Druck-, Entlüftungsleitungen u.dgl. und mit in den einzelnen Schaltstellungen jeweils zusammen mit Umfangsflächen des Ventilgehäuses einen Ventilsitz bildenden Dichtungsringen.

Derartige als Wegeventile ausgebildete Ventile werden in der Hydraulik und der Pneumatik verwendet. Hierbei wird der Einsatz solcher Ventile oft in Abhängigkeit der Zylinderfahrzeiten von der Ventilnennweite und der Belastung festgelegt.

Die Eigenarten der Ventilgattung führen oft bei metallisch gedichteten Drehschiebern zu Problemen der Dichtheit und bei Längsschieber-Ventilen mit Hubmagneten zu einer hohen Reibung und mangelhaften Schaltzeiten. Außerdem umfassen solche Ventile eine wirtschaftlich negativ zu bewertende hohe Zahl von Teilen, wobei insbesondere die Zahl der Dichtungsringe eine erhebliche Bedeutung besitzt.

Der vorliegenden Erfindung liegt die Aufgabe zugrunde, ein Ventil der eingangs bezeichneten Art mit einfachstem Aufbau bei einer großen Zahl von Schaltstellungen für unterschiedliche Anzahlen von Schaltwegen, mit kurzen Schaltzeiten und bei geringstmöglicher Teilezahl zu schaffen.

Die gestellte Aufgabe wird erfindungsgemäß dadurch gelöst, daß dem drehangetriebenen Ventilelement zumindest ein Dichtungsring zugeordnet ist, der jeweils in einer zur Drehachse schrägverlaufenden Ebene angeordnet ist, daß sich in derselben Ebene eine Scheibe oder ein Axialkörper befinden, die in unterschiedlichen Drehstellungen jeweils zusammen mit einem ortsfesten Dichtungsring oder die jeweilige Scheibe bzw. der Axialkörper und zumindest ein zugehöriger Dichtungsring zusammen mit der Ventilgehäusebohrung den Ventilsitz bilden. Hierdurch ist ein einfacher Aufbau gegeben, trotzdem sind mehrere Schaltstellungen möglich, und die Anzahl von Schaltstellungen ist leicht abzuändern. Außerdem können kurze Schaltzeiten gefahren werden und die Anzahl der Teile ist gering.

Mehrere Schaltstellungen können bei solchen Ventilen derart geschaffen werden, daß ein Dichtungsring bei zwei Drehstellungen der Scheibe in Abhängigkeit des Drehwinkels der Scheibe und in Abhängigkeit des Abstandes der beiden Ventilsitze aus zwei kreuzförmig sich durchdringenden Dichtungsringen gebildet ist und die kreuzförmigen Dichtungsringe in axial in der Ventilgehäusebohrung beabstandeten Kreuznuten festliegend eingebettet sind. Trotz der Anzahl von Wegen sind im wesentlichen nur zwei Teile und nur eine einzige Dichtung notwendig.

Die Anzahl möglicher Scaltstellungen bzw. Wege bei einer geringen Anzahl Teile kann jedoch dadurch erhöht werden, daß zwei oder mehr Scheiben auf einer drehangetriebenen Welle in Richtung der Drehachse hintereinander angeordnet sind.

Die Anordnung der Wege bzw. der Anschlüsse läßt sich auch dadurch beeinflussen, daß die hintereinander angeordneten Scheiben unter verschiedenen Winkeln zur Drehachse auf der Welle angeordnet sind oder die Scheiben bzw. die Nuten des Axialkörpers radial in unterschiedlichen Winkeln zueinander stehen.

Der Aufbau des Ventils ist in allen diesen Fällen gleich und dahingehend gestaltet, daß ein Ventilgehäuse mit einer zentralen, einendig in einem Gehäuseboden axial unbeweglich drehgelagerten Welle vorgesehen ist, daß auf der Welle zumindest eine schräg zur Drehachse angeordnete Scheibe drehfest angeordnet ist und daß das andere Wellenende mit einem Rotor eines Drehmotors verbunden ist.

Hierbei ist noch vorteilhaft, daß der Drehantrieb aus einem Elektromotor besteht, dessen Stator als Stator-Gehäuse an das Ventilgehäuse anschließt und befestigt ist oder aus einem Hand- bzw. pneumatischen Antrieb besteht.

Der auftretenden Reibung bzw. dem unvermeidlichen Verschleiß wirkt entgegen, daß der bzw. die Dichtungsringe mit einem ovalen Querschnitt ausgeführt sind.

Vorteilhafterweise können die Dichtringe dadurch abgestützt werden, daß eine oder mehrere der Scheiben mit einer oder mehreren, im Umfangsbereich und mit ihren Achsen parallel zur Drehachse verlaufenden Aussparungen versehen sind.

Schließlich ist auch noch vorteilhaft, daß der Stator des Drehantriebs mit einem Kunststoffgehäuse eingekapselt ist und daß an dem Kunststoffgehäuse ein Normstecker für den elektrischen Anschluß des Elektromotors vorgesehen ist.

Mehrere Ausführungsbeispiele der Erfindung sind in der Zeichnung dargestellt und werden im folgenden näher beschrieben. Es zeigen

Fig. 1a     einen axialen Querschnitt durch das Ventil gemäß einer ersten Ausführungsform,

Fig. 1b     denselben Querschnitt derselben Ausführungsform in einer anderen Schaltstellung des Ventilelementes,

Fig. 2      einen Querschnitt gemäß der Schnittangabe A - A in Fig. 1a,

Fig. 3a     einen axialen Querschnitt durch das Ventil für eine zweite Ausführungsform und

Fig. 3b     dasselbe Ventil in einer anderen Schaltstellung,

Fig. 4 einen axialen Querschnitt des Ventils für eine dritte Ausführungsform,

Fig. 5 einen axialen Querschnitt für das Ventil einer vierten Ausführungsform,

Fig. 6a den einteiligen Dichtungsring in Vorderansicht und

Fig. 6b den einteiligen Dichtungsring im Querschnitt.

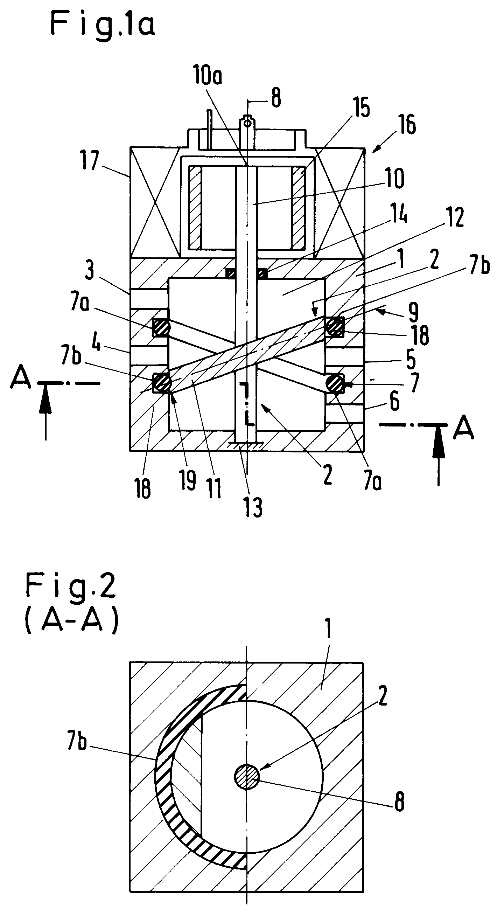

Das Druckluftventil weist in einem ersten Ausführungsbeispiel (Fig. 1a) ein einteiliges Ventilgehäuse 1 mit einem Ventilelement 2 für die verschiedenen Schaltstellungen auf, wobei Anschlüsse 3,4,5 und 6 für Arbeits-, Druck-, Entlüftungsleitungen u.dgl. vorgesehen sind. Dem Ventilelement 2 sind Dichtungsringe 7 auf eine besondere Art zugeordnet, die nachstehend beschrieben ist.

Dem drehangetriebenen Ventilelement 2 ist ein Dichtungsring 7a und ein Dichtungsring 7b zugeordnet, die einen einstückigen Dichtungsring 7 bilden. Jeder der Dichtungsringe 7a und 7b liegt in einer zur Drehachse 8 schräg verlaufenden Ebene 9. In der Ebene 9 befindet sich eine auf einer Welle 10 befestigte Scheibe 11. Anstelle der Scheibe 11 und der Welle 10 kann auch ein Axialkörper vorgesehen sein, der den Ventilraum 12 weitestgehend ausfüllt und drehbar mittels eines Axiallagers 13 sowie abgedichtet mittels der Dichtung 14, drehgelagert und drehangetrieben ist.

Der Antrieb besteht aus einem auf einem Wellenende 10a der Welle 10 befestigten Rotor 15 eines Drehantriebs 16, der mit seinem Statorgehäuse 17 dichtend mit dem Ventilgehäuse 1 verbunden ist.

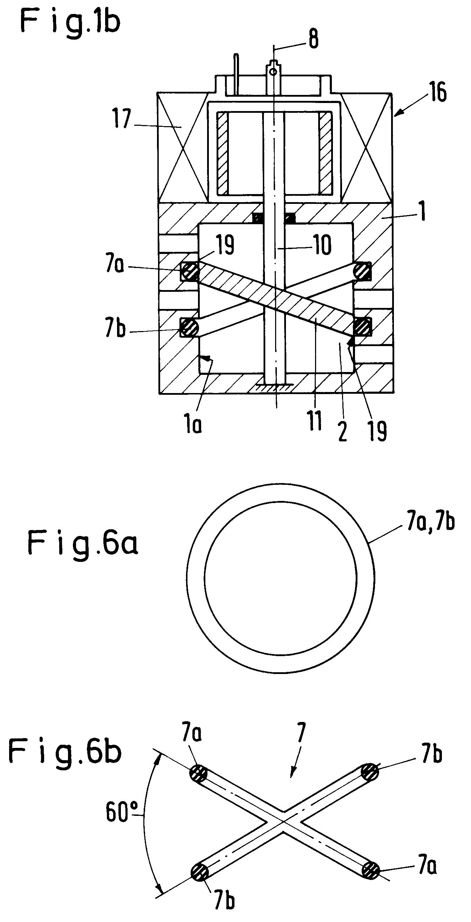

Fig. 1b zeigt, daß nach einer Drehung der Welle 10 um 180 Grad eine andere Schaltstellung des Ventils erreicht worden ist.

Hierbei sind die Dichtungsringe 7a und 7b ortsfest in Kreuznuten 18 eingefügt. Die Scheibe 11 und jeweils die Dichtungsringe 7a und 7b (bzw. der Axialkörper) bilden zusammen mit der Ventilgehäusebohrung 1a den Ventilsitz 19.

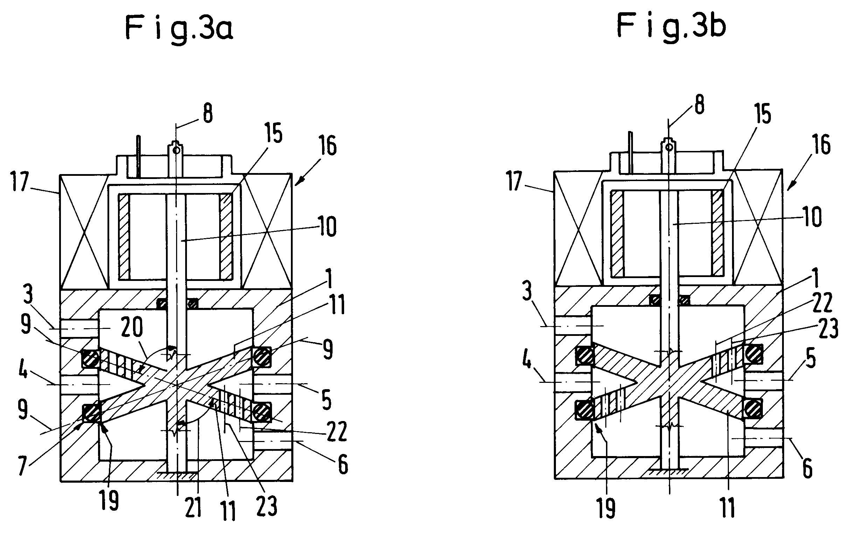

Nach einem zweiten Ausführungsbeispiel (Fig. 3a und 3b) sind zwei Scheiben 11 sich kreuzend auf der Welle 10 angeordnet, d.h. es sind jeweils Winkel 20 bzw. 21 zur Drehachse 8 vorgesehen. Eine oder beide Scheiben 11 sind mit mehreren, im Umfangsbereich und mit ihren Achsen 22 parallel zur Drehachse 8 verlaufenden Aussparungen 23 versehen. Da die Scheiben 11 den jeweiligen Dichtungsring 7 stützen, ergibt sich dadurch die Möglichkeit der Strömungsführung. Fig. 3b zeigt eine um 180 Grad gedrehte Drehstellung des Ventilelementes 2 gegenüber Fig. 3a.

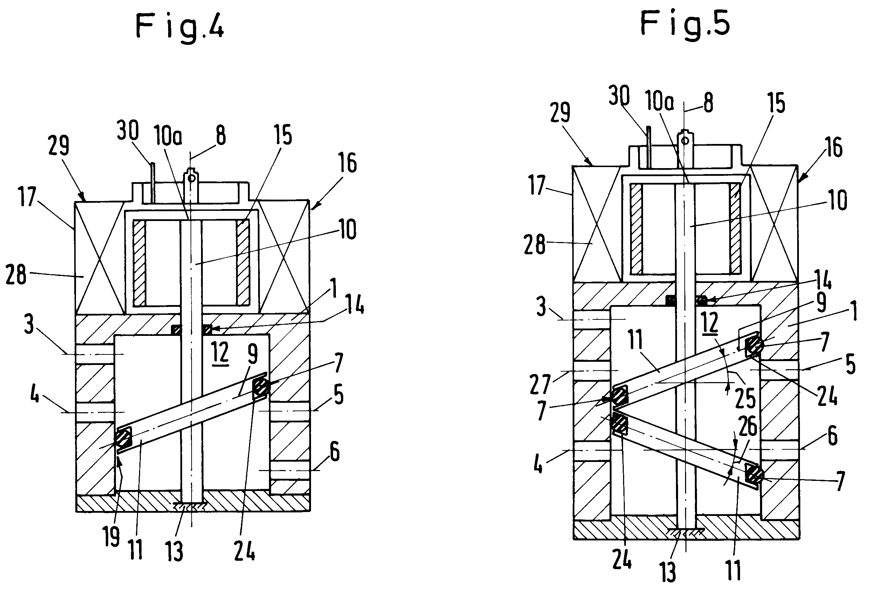

Eine dritte und vierte Ausführungsform sind in den Fig. 4 und 5 beschrieben. Die in Fig. 4 dargestellte dritte Ausführungsform zeigt eine einzige Scheibe 11 mit einem einzigen Dichtungsring 7, der dort in einer Nut 24 eingebettet liegt. Hier ist also der Dichtungsring 7 zusammen mit der Scheibe 11 bewegbar.

Die vierte Ausführungsform zeigt Fig. 5. Danach sind zwei unter verschiedenen Winkeln 25 und 26 auf der Welle 10 angeordnete Scheiben 11 vorgesehen, die jeweils den Dichtungsring 7 in Nuten 24 halten. Bei Drehung der Welle 10 kann hier ein weiterer Anschluß 27 geschaltet werden.

Die gesamte Baueinheit ist dicht verschlossen. Der Stator 28 des Drehantriebs 16 ist in dem Stator-Gehäuse 17 angeordnet und dieses ist in einem Kunststoffgehäuse 29 eingekapselt, und an dem Kunststoffgehäuse 29 ragt nur ein Normstecker 30 für den elektrischen Anschluß des Drehantriebs 16 vor.

Außerdem ist der einstückige Dichtungsring 7, bestehend aus den Dichtungsringen 7a und 7b, für sich getrennt in den Fig. 6a und 6b gezeigt. Wie in Fig. 6a sichtbar, ist die Vorderansicht des Dichtungsringes 7 kreisrund, obgleich es sich, Fig. 6b, um zwei kreuzförmig verlaufende Dichtungsringe 7a und 7b handelt.

## Patentansprüche

1. Ventil für Fluide, insbesondere Druckluftventil, mit einem einteiligen oder mehrteiligen Ventilgehäuse und mit einem in dem Ventilgehäuse gelagerten, in verschiedene Schaltstellungen bewegbaren, abgedichteten Ventilelement, mit an dem Ventilgehäuse vorgesehenen Anschlüssen für Arbeits-, Druck-, Entlüftungsleitungen u. dgl. und mit in den einzelnen Schaltstellungen jeweils zusammen mit Umfangsflächen des Ventilgehäuses einen Ventilsitz bildenden Dichtungsringen, dadurch gekennzeichnet, daß dem drehangetriebenen Ventilelement (2) zumindest ein Dichtungsring (7) zugeordnet ist, der jeweils in einer zur Drehachse (8) schrägverlaufenden Ebene (9) angeordnet ist, daß sich in derselben Ebene (9) eine Scheibe (11) oder ein Axialkörper befinden, die in unterschiedlichenDrehstellungen jeweils zusammen mit einem ortsfesten Dichtungsring (7) oder die jeweilige Scheibe (11) bzw. der Axialkörper und zumindest ein zugehöriger Dichtungsring (7) zusammen mit der Ventilgehäusebohrung (1a) den Ventilsitz (19) bilden.

2. Ventil nach Anspruch 1, dadurch gekennzeichnet, daß ein Dichtungsring (7) bei zwei Drehstellungen der Scheibe (11) in Abhängigkeit des Drehwinkels der Scheibe (11) und in Abhängigkeit des Abstandes der beiden Ventilsitze (19) aus zwei kreuzförmig sich durchdringenden Dichtungsringen (7a;7b) gebildet ist und die kreuzförmigen Dichtungsringe (7a;7b) in axial in der Ventilgehäusebohrung (1a) beabstandeten Kreuznuten (18) festliegend eingebettet sind.

3.  Ventil nach Anspruch 1,
dadurch gekennzeichnet,
daß zwei oder mehr Scheiben (11) auf einer drehangetriebenen Welle (10) in Richtung der Drehachse (8) hintereinander angeordnet sind.

4.  Ventil nach Anspruch 3,
dadurch gekennzeichnet,
daß die hintereinander angeordneten Scheiben (11) unter verschiedenen Winkeln zur Drehachse (8) auf der Welle (10) angeordnet sind oder die Scheiben (11) bzw. die Nuten (24) des Axialkörpers radial in unterschiedlichen Winkeln zueinander stehen.

5.  Ventil nach einem oder mehreren der Ansprüche 1 bis 4,
dadurch gekennzeichnet,
daß ein Ventilgehäuse (1) mit einer zentralen, einendig in einem Gehäuseboden axial unbeweglich drehgelagerten Welle (10) vorgesehen ist, daß auf der Welle (10) zumindest eine schräg zur Drehachse (8) angeordnete Scheibe (11) drehfest angeordnet ist und daß das andere Wellenende (10a) mit einem Rotor (15) eines Drehmotors (16) verbunden ist.

6.  Ventil nach Anspruch 5,
dadurch gekennzeichnet,
daß der Drehantrieb (16) aus einem Elektromotor besteht, dessen Stator (28) als Stator-Gehäuse (17) an das Ventilgehäuse (1) anschließt und befestigt ist oder aus einem Hand- bzw. pneumatischen Antrieb besteht.

7.  Ventil nach einem oder mehreren der Ansprüche 1 bis 6,
dadurch gekennzeichnet,
daß der bzw. die Dichtungsringe (7;7a;7b) mit einem ovalen Querschnitt ausgeführt sind.

8.  Ventil nach einem oder mehreren der Ansprüche 1 bis 7,
dadurch gekennzeichnet,
daß eine oder mehrere der Scheiben (11) mit einer oder mehreren, im Umfangsbereich und mit ihren Achsen (22) parallel zur Drehachse (8) verlaufenden Aussparungen (23) versehen sind.

9.  Ventil nach einem oder mehreren der Ansprüche 1 bis 8,

dadurch gekennzeichnet,
daß der Stator (28) des Drehantriebs (16) mit einem Kunststoffgehäuse (29) eingekapselt ist und daß an dem Kunststoffgehäuse (29) ein Normstecker (30) für den elektrischen Anschluß des Elektromotors vorgesehen ist.

## Fig.1a

## Fig.2
## (A-A)

# Fig.1b

# Fig.6a

# Fig.6b

Fig.3a

Fig.3b

Fig.5

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 090 396 (RUDELICK)<br>* das ganze Dokument *<br>--- | 1,3 | F16K11/085 |
| X | FR-A-2 519 401 (APV)<br>* Seite 3, Zeile 6 - Seite 5, Zeile 13; Abbildungen 1-3 *<br>--- | 1,5 | |
| X | DE-A-2 144 373 (FISKER & NIELSEN)<br>* das ganze Dokument *<br>--- | 1 | |
| X | PATENT ABSTRACTS OF JAPAN<br>vol. 7, no. 137 (M-222)(1282) 15. Juni 1983<br>& JP-A-58 05D 368 ( CHIYODA SEISAKUSHO ) 24. März 1983<br>* Zusammenfassung *<br><br>----- | 1 | |
| | | | **RECHERCHIERTE SACHGEBIETE (Int. Cl.5 )**<br><br>F16K |

Der vorliegende Recherchenbericht wurde für alle Patentansprüche erstellt

| Recherchenort | Abschlußdatum der Recherche | Prüfer |
|---|---|---|
| DEN HAAG | 25 MAERZ 1992 | CHRISTENSEN C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes Dokument